Europäisches Patentamt

European Patent Office

Office européen des brevets

(19)

(11) Veröffentlichungsnummer: **0 285 600**
**A1**

(12) **EUROPÄISCHE PATENTANMELDUNG**

(21) Anmeldenummer: 88890063.6

(22) Anmeldetag: 18.03.88

(51) Int. Cl.⁴: **E 03 F 5/04**
E 03 C 1/29

(30) Priorität: 02.04.87 AT 806/87

(43) Veröffentlichungstag der Anmeldung:
05.10.88 Patentblatt 88/40

(84) Benannte Vertragsstaaten:
BE CH DE IT LI LU NL SE

(71) Anmelder: **FIRMA ADOLF WEYRMULLER**
**Freistädterstrasse 211**
**A-4040 Linz (AT)**

(72) Erfinder: **Weyrmüller, Adolf**
**Freisstädterstrasse 211**
**A-4040 Linz (AT)**

(74) Vertreter: **Hübscher, Heiner, Dipl.-Ing. et al**
**Spittelwiese 7**
**A-4020 Linz (AT)**

(54) **Bodenablauf.**

(57) Ein Bodenablauf (1) besteht aus einem einen oberen Randfalz (3) für einen Gitterrost (4) und einen unteren Ansatzstutzen (5a, 5b) für einen Kanalanschluß (6) aufweisenden Gehäuse (2a, 2b), das als Geruchsverschluß eine innen umlaufende Rinne (7a, 7b) bildet, in welche ein sich nach oben hin erweiterndes Profil mit konkav gekrümmtem Grund (10) besitzende Rinne (7a, 7b) eine abwärts ragende Tauchwand (8) eingreift.

Um einen anpassungsfähigen und vor allem schnell und gründlich reinigbaren Ablauf zu erreichen, ist das Gehäuse (2a, 2b) im Horizontalschnitt eckig ausgestaltet, weist die Rinne (7a, 7b) eine zum Gehäuseinneren hin geneigte Innenwand (11) auf und ist die Tauchwand (8) an einem Gehäuseeinsatz (9a, 9b) angeordnet.

EP 0 285 600 A1

## Beschreibung

### Bodenablauf

Die Erfindung bezieht sich auf einen Bodenablauf, mit einem einen oberen Randfalz für einen Gitterrost und einen unteren Ansatzstutzen für einen Kanalanschluß aufweisenden Gehäuse, das als Geruchsverschluß eine innen umlaufende Rinne bildet, in welche ein sich nach oben hin erweiterndes Profil mit konkav gekrümmtem Grund besitzende Rinne eine abwärts ragende Tauchwand eingreift.

Diese Bodenabläufe dienen zur Entwässerung von beliebigen, im Freien oder innerhalb von Gebäuden liegenden Bodenflächen und sollen die Abwässer gesammelt in die anschließenden Kanäle einleiten. Um dabei Geruchsbelästigungen zu vermeiden und eine hygienische Abwasserentsorgung zu gewährleisten, müssen diese Bodenabläufe einerseits einen geruchsdichten Kanalabschluß mit sich bringen und anderseits gut und vor allem gründlich reinigbar sein. Die bekannten Bodenabläufe sind allerdings mit Ansatzstutzen in Form von Standrohren bestückt, die durch den Gehäuseboden in das Gehäuseinnere hochragen und zusammen mit dem Gehäuseboden und der Gehäuseaußenwand die für den Geruchsverschluß erforderliche Rinne bilden. Diese Rinne, in die eine Tauchwand, beispielsweise der Abdeckung eingreift, nimmt Abwasser auf und gewährleistet daher zusammen mit der in das stehende Abwasser eintauchenden Tauchwand einen sicheren Geruchsverschluß, sie weist aber eine im wesentlichen lotrechte Innenwand und eine parallele oder auswärts geneigte Außenwand auf, so daß der sich in der Rinne ablagernde Schmutz nur mühsam und vor allem nur unbefriedigend entfernt werden kann. Da die trotz Säuberung zurückbleibenden Schmutzreste Bakterienherde und Brutstätten für Ungeziefer u. dgl. sind, genügen diese bekannten Bodenabläufe strengeren hygienischen Ansprüchen nicht.

Der Erfindung liegt daher die Aufgabe, zugrunde diese Mängel zu beseitigen und einen Bodenablauf der eingangs geschilderten Art zu schaffen, der nicht nur für einen sicheren Geruchsverschluß sorgt, sondern darüber hinaus auch rationell und einwandfrei gereinigt werden kann und sich außerdem in seiner Ausgestaltung an die jeweiligen Gegebenheiten anpassen läßt.

Die Erfindung löst diese Aufgabe dadurch, daß das Gehäuse im Horizontalschnitt eckig ausgestattet ist, daß die Rinne eine zum Gehäuseinneren hin geneigte Innenwand aufweist und daß die Tauchwand an einem Gehäuseeinsatz angeordnet ist. Nach dem Abnehmen des Gitterrostes und dem Herausheben des Gehäuseeinsatzes kann die Rinne mit einem Wasserschlauch oder einem Hochdruckstrahlgerät in kürzester Zeit ausgewaschen und gesäubert werden, wobei der Eckverlauf und die spezielle Profilierung dieser Rinne eine gründliche Reinigung erlauben und ein Aufwirbeln auch festsitzender Ablagerungen sowie das Wegspülen der Schmutzteile in den Kanal ermöglichen. Der Bodenablauf ist mit wenigen Handgriffen vollkommen problemlos zu säubern und erfüllt alle Anforderungen hinsichtlich Geruchsdichtheit und Hygiene. Da außerdem kein Standrohr mehr für die Ausbildung der Rinne erforderlich ist, kann die Anordnung des Ansatzstutzens weitgehend frei gewählt und für verschiedene Anschlußmöglichkeiten ausgelegt werden.

Beträgt erfindungsgemäß der Krümmungradius des Rinnengrundes mindestens 15 mm und liegt der Neigungswinkel der Rinneninnenwand zur Horizontalen innerhalb eines Bereiches von 30° bis 60°, kommt es bei zweckmäßigen Abmessungen des Bodenablaufes zu einem das Reinigen besonders begünstigenden Rinnenprofil.

Ist die Rinne im Gehäuseboden angeordnet, kann vorteilhafterweise die Rinneninnenwand an einen zum Ansatzstutzen hin abfallenden und in diesen einmündenden Zulaufbereich des Gehäusebodens anschließen. Rinne, Gehäuseboden und Anschlußstutzen gehen daher mehr oder weniger fließend ineinander über, so daß es außerhalb der Rinne keine Schmutzsammelstellen mehr gibt und zusammen mit der Rinne auch das ganze Gehäuse schnell und sauber zu reinigen ist.

Gemäß einer besonders günstigen Ausgestaltung der Erfindung ist die Rinne mit Abstand oberhalb des Gehäusebodens angeordnet und der Gehäuseeinsatz bildet einen Einlauftrichter, dessen Mündung in ein heraushebbares Sammelgefäß des Gehäuses hineinragt. Mit dieser im oberen Randbereich des Gehäuses verlaufenden Rinne ist es möglich, verhältnismäßig flache Bodenabläufe zu bauen und dabei den Ansatzstutzen horizontal oder vertikal oder auch in jeder anderen Richtung zu verlegen. Da der Einlauftrichter mit seiner Tauchwand in die Gehäuserinne und mit seiner Mündung in das Sammelgefäß eintaucht, kommt es dabei wiederum zu einem sicheren Geruchsverschluß.

Ist das Sammelgefäß mit nach außen umgebogenen Randteilen seiner Seitenwände in die Gehäuserinne einhängbar, ergibt sich eine einfache Konstruktion und Sammelgefäß und Einlauftrichter lassen sich beim Einsetzen und Herausnehmen gut handhaben.

In der Zeichnung ist der Erfindungsgegenstand rein schematisch veranschaulicht, une zwar zeigen

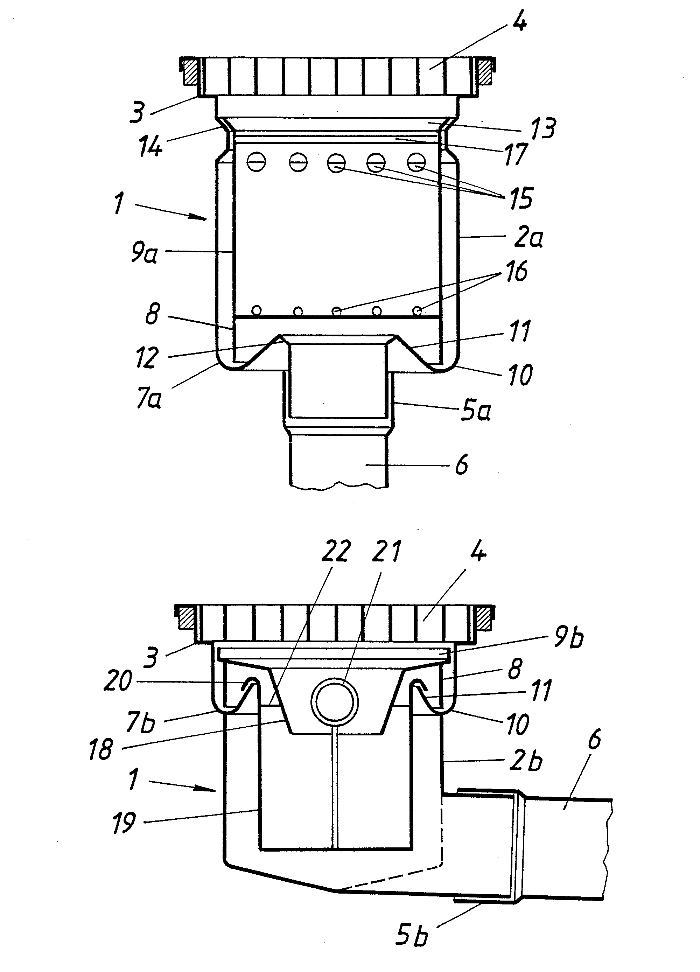

Fig. 1 und 2 zwei Ausführungsbeispiele eines erfindungsgemäßen Bodenablaufes jeweils im Vertikalschnitt.

Ein Bodenablauf 1 besteht aus einem im Horizontalschnitt etwa quadratischen Gehäuse 2a, 2b, das einen oberen Randfalz 3 zur Aufnahme eines Gitterrostes 4 sowie einen unteren Ansatzstutzen 5a, 5b für den Anschluß eines Kanals 6 aufweist. Um einen sicheren Geruchsverschluß zu erreichen, bildet das Gehäuse 2a, 2b eine innere umlaufende Rinne 7a, 7b, in die eine abwärts ragende Tauchwand 8 eines Gehäuseeinsatzes 9a, 9b eingreift. Die Gehäuserinnen 7a, 7b besitzen ein sich nach oben hin erweiterndes Profil mit konkav gekrümmtem Grund 10 und zum Gehäuseinneren hin geneigter Innenwand 11, so daß nach dem Herausnehmen der Einsätze und dem Entfernen der Gitterroste die Rinnen 7a, 7b schnell und vor allem gründlich durch einen Wasserstrahl od. dgl. gereinigt werden können.

Wie in Fig. 1 angedeutet, verläuft die Rinne 7a im Gehäuseboden, wobei die Rinneninnenwand 11 an einen zum Ansatzstutzen 5a hin abfallenden und in diesen einmündenden Zulaufbereich 12 des Gehäusebodens anschließt, wodurch der beim Ausspülen der Rinne 7a weggeschwemmte Schmutz, ohne sich an anderer Stelle sammeln zu können, sofort in den Ansatzstutzen 5a gewaschen wird. Der Gehäuseeinsatz 9a ist als Sammelgefäß ausgebildet, das sich über abgewinkelte Randteile 13 an entsprechenden eingezogenen Gegenflächen 14 des Gehäuses 2a abstützt. Das Sammelgefäß weist obere Überlauflöcher 15 für den Abwasserüberlauf und gegebenenfalls untere Entwässerungslöcher 16 zum Entwässern der im Sammelbehälter 9a zurückbleibenden Feststoffe auf und kann über eine Griffstange 17 einfach aus dem Gehäuse 2a entnommen oder in das Gehäuse eingesetzt werden.

Durch die bodenseitige Anordnung des Geruchsverschlusses ist beim Ausführungsbeispiel nach Fig. 1 das Gehäuse 2a mit einem vertikalen Ansatzstutzen 5a ausgerüstet, der sich auch für einen vertikalen Kanalanschluß eignet.

Gemäß dem Ausführungsbeispiel nach Fig. 2 verläuft die Gehäuserinne 7b mit Abstand oberhalb des Gehäusebodens, so daß hier weitgehende Freiheit für die Lage des Ansatzstutzens 5b besteht. Angedeutet ist ein horizontaler Ansatzstutzen 5b für einen horizontalen Kanalanschluß, doch könnte dieser Ansatzstutzen 5b auch in jeder anderen Richtung vom Gehäuse 2b wegführen, ohne die Funktionstüchtigkeit des Bodenablaufes 1 zu beeinträchtigen.

Um trotz der gegebenen Bodenfreiheit den gewüschten Geruchsverschluß zu garantieren, wirkt die Gehäuseeinsatz 7b mit einem als Einlauftrichter dienenden Gehäuseeinsatz 9b zusammen, der sich mit seiner Tauchwand 8 in der Rinne 7b abstützt. Die Mündung 18 des Einlauftrichters ragt in ein Sammelgefäß 19 hinein, das seinerseits über umgebogene Randteile 20 in die Rinne 7b eingehängt ist. Zur Handhabung dieses Sammelgefäßes 19 ist ein Griff 21 vorgesehen.

Das Abwasser fließt durch den Gitterrost 4 über den Einlauftrichter 9b in das Sammelgefäß 19, das mit gegenüber den Randteilen 20 abgesenkten Randbereichen 22 einen Überlauf bildet. Die festen Abfälle bleiben zurück und das Abwasser fließt über den Überlauf 22 durch den Ansatzstutzen 5b in den Kanal 6. Das sich in der Rinne 7b sammelnde Wasser zusammen mit der Tauchwand 8 einerseits und die in das Sammelgefäß 19 eintauchende Mündung 18 des Einlauftrichters 9b anderseits ergeben einen vollständigen Geruchsverschluß, wobei feste Rückstände im Sammelgefäß 19 abgelagert und dann durch Herausnehmen dieses Sammelgefäßes 19 einfach entfernt werden können. Auch hier läßt sich der Bodenablauf 1 mit wenigen Handgriffen zerlegen und durch Ausspritzen des Gehäuses 2b und der Rinne 7b schnell und gründlich reinigen.

## Patentansprüche

1. Bodenablauf (1), mit einem einen oberen Randfalz (3) für einen Gitterrost (4) und einen unteren Ansatzstutzen (5a, 5b) für einen Kanalanschluß aufweisenden Gehäuse (2a, 2b), das als Geruchsverschuß eine innen umlaufende Rinne (7a, 7b) bildet, in welche ein sich nach oben hin erweiterndes Profil mit konkav gekrümmtem Grund (10) besitzende Rinne (7a, 7b) eine abwärts ragende Tauchwand (8) eingreift, dadurch gekennzeichnet, daß das Gehäuse (2a, 2b) im Horizontalschnitt eckig ausgestaltet ist, daß die Rinne (7a, 7b) eine zum Gehäuseinneren hin geneigte Innenwand (11) aufweist, und daß die Tauchwand (8) an einem Gehäuseeinsatz (9a, 9b) angeordnet ist.

2. Bodenablauf nach Anspruch 1, dadurch gekennzeichnet, daß der Krümmungsradius des Rinnengrundes (10) mindestens 15 mm beträgt und der Neigungswinkel der Rinneninnenwand (11) zur Horizontalen innerhalb eines Bereiches von 30° bis 60° liegt.

3. Bodenablauf nach Anspruch 1 oder 2, mit einer im Gehäuseboden angeordneten Rinne, dadurch gekennzeichnet, daß die Rinneninnenwand (11) an einem zum Ansatzstutzen (5a) hin abfallenden und in diesen einmündenden Zulaufbereich (12) des Gehäusebodens anschließt.

4. Bodenablauf nach Anspruch 1 oder 2, dadurch gekennzeichnet, daß die Rinne (7a) mit Abstand oberhalb des Gehäusebodens angeordnet ist und der Gehäuseeinsatz (9b) einen Einlauftrichter bildet, dessen Mündung (18) in ein heraushebbares Sammelgefäß (19) des Gehäuses (2b) hineinragt.

5. Bodenablauf nach Anspruch 4, dadurch gekennzeichnet, daß das Sammelgefäß (19) mit nach außen umgebogenen Randteilen (20) seiner Seitenwände in die Gehäuserinne (7b) einhängbar ist.

0285600

## EUROPÄISCHER RECHERCHENBERICHT

**Europäisches Patentamt**

Nummer der Anmeldung

EP 88 89 0063

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 277 219 (PANSE)<br>* Seite 1, Zeilen 30-39; Figur 1 *<br>--- | 1-3 | E 03 F 5/04<br>E 03 C 1/29 |
| Y | GB-A- 869 675 (BURN BROTHERS)<br>* Seite 1, Zeilen 12,13; Seite 2, Zeilen 85-86; Figuren 5,6 *<br>--- | 1-3 | |
| A | GB-A- 277 502 (TERRY)<br>* Seite 1, Zeile 18; Seite 3, Zeilen 14-34; Figur 4 *<br>--- | | |
| Y | DE-C- 825 830 (SONNTAG)<br>* Seite 2, Zeile 41; Figur 1 *<br>--- | 2 | |
| Y | DE-A-2 536 471 (WIEDEMANN)<br>* Das ganze Dokument *<br>--- | 3 | |
| A | FR-A-2 206 769 (PONT-A-MOUSSON)<br>* Das ganze Dokument *<br>--- | 4 | |
| A | DE-B-1 205 016 (KÄRNER)<br>----- | | **RECHERCHIERTE SACHGEBIETE (Int. Cl.4)**<br><br>E 03 F<br>E 03 C |

Der vorliegende Recherchenbericht wurde für alle Patentansprüche erstellt

| Recherchenort | Abschlußdatum der Recherche | Prüfer |
|---|---|---|
| DEN HAAG | 07-07-1988 | HANNAART J.P. |